**Europäisches Patentamt**

**European Patent Office**

**Office européen des brevets**

(19)

(11) Veröffentlichungsnummer: **0 321 591
B1**

(12) **EUROPÄISCHE PATENTSCHRIFT**

(45) Veröffentlichungstag der Patentschrift:
18.07.90

(51) Int. Cl.⁵: **B29C 45/67**

(21) Anmeldenummer: **87118612.8**

(22) Anmeldetag: **15.12.87**

(54) **Formwerkzeug zur Herstellung eines Formteiles aus Mehrkomponentenkunststoff.**

(43) Veröffentlichungstag der Anmeldung:
**28.06.89 Patentblatt 89/26**

(45) Bekanntmachung des Hinweises auf die Patenterteilung:
**18.07.90 Patentblatt 90/29**

(84) Benannte Vertragsstaaten:
**AT BE DE ES FR GB IT NL SE**

(56) Entgegenhaltungen:
**CH-A- 377 094
FR-A- 1 543 009
GB-A- 1 032 477
GB-A- 2 005 186
GB-A- 2 031 787
US-A- 3 862 596
US-A- 4 461 456**

(73) Patentinhaber: **Fritsche-Möllmann GmbH & Co. KG,
Hansaring 6, D-4531 Lotte(DE)**

(72) Erfinder: **Möllmann,Günter, Höhneberg 2,
4506 Hagen(DE)**

ACTORUM AG

**Beschreibung**

Die Erfindung betrifft ein Formwerkzeug zur Herstellung eines Formteiles aus Mehrkomponenten-Kunststoff, insbesondere Polyurethan, umfassend ein Gestell, zwei in dem Gestell an Trägern festgelegte Teilwerkzeuge, die durch eine Relativbewegung wenigstens eines Werkzeugträgers in eine erste Stellung bringbar sind, in der die Teilwerkzeuge einen geringen gegenseitigen Abstand haben, wobei der bewegbare Werkzeugträger in der ersten Stellung auf sich quer zu seiner Richtung erstreckenden Stirnflächen von Schwenkhebeln abstützbar ist und wobei eine Hubeinrichtung vorgesehen ist, durch die die Teilwerkzeuge in eine zweite Stellung annäherbar und verpreßbar sind.

Ein solches Formwerkzeug ist aus der GB-A 2 005 186 bekannt. Dem relativ beweglichen Werkzeugträger sind dabei Schnellhub- und Preßzylindereinheiten zugeordnet, die in dem Gestell gelagert sind. Sie gestatten eine schnelle Überführung der während der bestimmungsgemäßen Verwendung auf den Werkzeugträgern festgelegten Teilwerkzeuge in die erste Stellung, in der sie einen geringen gegenseitigen Abstand von einander haben und eine sich daran anschließende Annäherung und hochgradige Verpressung. Die Schnellhubeinrichtung umfaßt indessen nur eine einzige Kolben-Zylindereinheit, welche dem beweglichen Werkzeugträger mittig zugeordnet ist. Die hieraus resultierende, punktförmige Einleitung der für die Durchführung der Schließbewegung erforderlichen Kräfte erfordert eine robuste und damit schwere Auslegung des relativ beweglichen Werkzeugträgers, was der Realisierung einer schnellen Hubbewegung entgegensteht. Die diesbezüglichen Probleme werden weiter vergrößert durch zwei massive Schwenkhebel, die in dem beweglichen Werkzeugträger schwenkbar gelagert sind und einen Bestandteil desselben bilden. Sie dienen während der Betätigung der Preßzylinder der Übertragung der für die Annäherung und Verpressung der Teilwerkzeuge erforderlichen Kräfte und werden nach dem Erreichen der ersten Stellung eingeschwenkt und mit ihren Stirnflächen mit den Kolben von Preßzylindereinheiten in Eingriff gebracht. Die Krafteinleitung erfolgt auch in diesem Falle punktförmig und bedingt eine schwergewichtige Auslegung sowohl der Schwenkhebel als auch des beweglichen Werkzeugträgers. Die daraus resultierende Trägheitsmasse ist erheblich und bedingt Probleme bei der Durchführung schneller Öffnungs- und Schließbewegungen.

Ein anderes Formwerkzeug ist aus der CH-A 377 094 bekannt. Es dient der Herstellung von Formteilen aus thermoplastischen Kunststoffen und die Hubeinrichtung besteht aus einem in dem einen Werkzeugträger verschiebbaren Preßkolben großen Durchmessers, der seinerseits einen in dem Gestell festgelegten Hilfskolben kleinen Durchmessers mit einem koaxialen Arbeitszylinder umschließt. Der beschriebene Werkzeugträger ist in bezug auf den anderen Werkzeugträger beweglich, was es gestattet, die beiden Teilwerkzeuge durch eine Druckbeaufschlagung des Hilfskolbens bis auf einen geringen gegenseitigen Abstand aneinander anzunähern. Sie werden in dieser Stellung durch in dem Gestell gelagerte Riegel blockiert, die bei herausgefahrenem Arbeitszylinder aus zwei einander gegenüberliegenden Schlitzen ausgerückt werden und den Boden des Arbeitszylinders mit sich quer zu ihrer Längsrichtung erstreckenden Stützflächen untergreifen. Der Hilfskolben ist dadurch während der anschließenden Druckbeaufschlagung des Preßkolbens hydraulisch entlastet, was die Erzielung großer Schließdrücke des Werkzeuges erlaubt. Der relativ bewegliche Werkzeugträger weist jedoch infolge der Einbeziehung des Preßkolbens und des Arbeitszylinders in sein Gewicht eine große Trägheitsmasse auf, was der Erzielung kurzer Taktzeiten während der bestimmungsgemäßen Verwendung entgegensteht.

Der Erfindung liegt die Aufgabe zugrunde, ein Formwerkzeug der eingangs genannten Art derart weiterzuentwickeln, daß sich eine deutliche Verminderung des Gewichtes der bei der bestimmungsgemäßen Verwendung des Formwerkzeuges zu bewegenden Trägheitsmassen ergibt.

Diese Aufgabe wird erfindungsgemäß bei einem Formwerkzeug der eingangs genannten Art dadurch gelöst, daß an dem bewegbaren Werkzeugträger auf der von den Teilwerkzeugen abgewandten Seite sich im wesentlichen quer zur Richtung der Schließbewegung erstreckende Stützflächen vorgesehen sind und daß die Schwenkhebel an durchgehenden Wellen befestigt und über die ganze Länge des bewegbaren Werkzeugträgers in einem gleichbleibend geringen, gegenseitigen Abstand verteilt sind und daß die Wellen auf der von den Teilwerkzeugen abgewandten Seite in dem Gestell gelagert sind. Der gemeinsame Antrieb der Schwenkhebel wird hierdurch vereinfacht. Durch die Verteilung der Schwenkhebel in einem gleichbleibend geringen, gegenseitigen Abstand über die ganze Länge des bewegbaren Werkzeugträgers und die Festlegung an Wellen, die in dem Gestell gelagert sind, ist die Biegebeanspruchung des bewegbaren Werkzeugträgers in Richtung seiner Längsachse gering. Hierdurch ist eine leichte Auslegung möglich, wodurch bereits bei Verwendung von verhältnismäßig geringen Antriebskräften große Beschleunigungen beim Öffnen und Schließen des Formwerkzeuges erzielt werden können. Die Taktzeiten sind dementsprechend gering und erleichtern die Verwendung des Formwerkzeuges in der Massenproduktion.

Die Schwenkhebel können von säulenförmiger Gestalt sein und weisen in diesem Falle bei geringem Gewicht eine besonders große Tragfähigkeit in Richtung ihrer Erstreckung auf.

Sie erstrecken sich bei einer Ausführung, bei der die Wellen in der Bewegungsebene der Stützflächen in dem Gestell gelagert sind bei blockiertem Werkzeugträger in Richtung der Schließbewegung, d.h. in Richtung der eingeleiteten Kräfte, wodurch eine optimale Ausnutzung der Tragfähigkeit gewährleistet ist. Die Schwenkhebel können dadurch sehr leicht gestaltet werden und sind dementsprechend leicht bewegbar. Ihr Antrieb tritt in dem Gestell nicht störend in Erscheinung. Dennoch ergibt sich eine gegenseitige Überlagerung der Biegesteifigkeit der Welle mit derjenigen des Werkzeugträgers, was erlaubt, letzteren sehr leicht zu bauen und auf diese Weise eine deutliche Verminderung der während des normalen Arbeitstaktes bewegten Trägheitsmassen zu erzielen. Zusätzlich werden Querkräfte vermieden, was es gestattet, den Aufwand für die Führungen zwischen dem Gestell und dem relativ bewegbaren Werkzeugträger zu reduzieren und dennoch eine hochpräzise gegenseitige Zuordnung in jeder Zuordnungsposition zu erhalten. Auch der Verschleiß in dem genannten Bereich ist deutlich reduziert.

Nach einer anderen Ausgestaltung ist es vorgesehen, daß die Schwenkhebel an paarweise benachbarten gegensinnig drehbaren Wellen festgelegt und im wesentlichen quer zur Richtung der Schließbewegung im Gestell ablegbar sind. Sie befinden sich dadurch bei geöffnetem Formwerkzeug unterhalb des Werkzeugträgers, was die Zugänglichkeit erleichtert. Bei einer Ausführung, bei der die Schwenkhebel eines jeden Wellenpaares einander auf Lücke zugeordnet und dadurch ineinandergreifend ablegbar sind, ergibt sich die Möglichkeit, die Länge der Schwenkhebel und damit die Länge der Hubbewegung des bewegbaren Werkzeugträgers entsprechend zu vergrößern. Hinsichtlich der Zugänglichkeit des geöffneten Werkzeuges ergeben sich dadurch Vorteile, beispielsweise in Hinblick auf die Werkzeugbeschickung und den Werkzeugwechsel.

Die Stützflächen sind auf der von den Teilwerkzeugen abgewandten Seite des bewegbaren Werkzeugträgers angeordnet. Dieser kann durch eine rechteckige Platte gebildet sein, wobei sich eine Anordnung im Bereich der Längskanten empfiehlt. Die Länge der Schwenkhebel kann dementsprechend groß bemessen werden, was die Zugänglichkeit des geöffneten Formwerkzeuges verbessert.

Die den bewegbaren Werkzeugträger in eine erste Stellung (d.h. am Ende des Leerhubes) transportierende Einrichtung ist durch die mechanische Blockierung des Werkzeugträgers in der ersten Stellung nicht der Einwirkung der von der Hubeinrichtung erzeugten Schließkräfte ausgesetzt. Eine allein dem Transport des Werkzeugträgers genügende Auslegung der Einrichtung ist daher ausreichend und mit einfach einzubauenden, kleinformatigen Einrichtungen erzielbar. Entsprechende Einrichtungen sind kostengünstig verfügbar und es bietet sich dadurch an, gegebenenfalls eine größere Anzahl derselben gleichwirkend an einer großen Zahl von Lastangriffspunkten angreifen zu lassen und so eine eine leichte Ausbildung des Werkzeugträgers zu ermöglichen und hierdurch dessen Gewicht zu reduzieren in Hinblick auf eine verbesserte Beweglichkeit.

In der ersten Stellung, in der die beiden Teilwerkzeuge einen geringen gegenseitigen Abstand haben, wird der Werkzeugträger der relativ bewegbaren Einheit mit seinen Stützflächen statisch ruhend auf den Schwenkhebeln abgelegt und abgestützt, was einen ungleichmäßigen Verschleiß im Bereich der einander berührenden Flächen normalerweise nicht zur Folge hat. Auch nach langfristigem Gebrauch ist dadurch bei dem erfindungsgemäßen Formwerkzeug stets eine präzise gegenseitige Zuordnung der beiden Teilwerkzeuge in der ersten Stellung gewährleistet.

Der relativ bewegbare Werkzeugträger wird durch mehrere Stützflächen auf den Schwenkhebeln abgestützt. Hierdurch ergeben sich ebenfalls mehrere Krafteinleitungspunkte, was es erlaubt, den Werkzeugträger in Abhängigkeit von der Anzahl und der gegenseitigen Zuornung derselben leicht und damit leicht bewegbar zu gestalten, ohne daß eine Beeinträchtigung der Steife in Kauf genommen werden müßte. Hinsichtlich der Auslegung der zugehörigen Bewegungseinrichtung ist das von erheblichem Vorteil.

In der ersten Stellung, in der der relativ bewegbare Werkzeugträger auf den Schwenkhebeln abgestützt ist, haben das Werkzeugober- und das Werkzeugunterteil noch einen geringen gegenseitigen Abstand. Die weitere gegenseitige Annäherung der beiden Teilwerkzeuge und deren anschließende Verpressung werden bei dem erfindungsgemäßen Formwerkzeug ausschließlich durch die Hubeinrichtung bewirkt. Diese hat nur einen sehr geringen Hub und ist durch Führungsaufgaben nicht nennenswert belastet. Eine sehr feinfühlige Annäherung und Verpressung des Werkzeugober- und des Werkzeugunterteiles ist dadurch möglich.

Die Beweglichkeit der Werkzeugträger ist in Abhängigkeit von der gewünschten Zugänglichkeit des Formwerkzeuges festzulegen. Es ist insofern ohne weiteres möglich, beide Werkzeugträger oder nur den oberen oder nur den unteren Werkzeugträger beweglich zu lagern. Unter bestimmten technischen und auch unter wirtschaftlichen Gesichtspunkten wird der letztgenannten Ausführung jedoch im Rahmen der vorliegenden Erfindung zumeist der Vorzug gegeben. Sie erleichtert auch die Einspeisung des Reaktionsgemisches in das geschlossene Formwerkzeug.

Eine wesentliche Verbesserung des Formwerkzeuges wird erhalten, wenn beide Werkzeugträger beweglich gelagert sind. Neben einer vergrößerten Öffnungsweite, die das Einlegen und das Entnehmen des fertigen Formteiles begünstigt, wird so eine vereinfachte Möglichkeit des Werkzeugwechsels erzielt.

In diesem Sinne ist es auch nicht immer erforderlich, daß beide Werkzeugträger auf geradlinig verlaufenden Bahnen in die Schließstellung bewegt werden. Schwenkbewegungen wenigstens eines der beiden Werkzeugträger sind vielmehr ebenfalls möglich und haben sich insbesondere für den oberen Werkzeugträger bewährt, weil sich hierdurch die Möglichkeit ergibt, den Raum oberhalb des Werkzeugunterteils frei zu machen und das Werkzeugoberteil in eine ebenfalls frei von oben zugängliche Lage zu bringen. Beide Werkzeugteile können so leicht mittels eines Krans gewechselt werden.

Die beiden Werkzeugträger bestehen aus biegesteifen Platten, die in einem Gestell angeordnet sind. Letzteres ist zweckmäßig rahmenartig gestaltet und verleiht der Gesamtkonstruktion eine große Robustheit.

Die Hubeinrichtung führt einen kleinen Hub aus, was es erlaubt, auch die Verwendung von dichtungslosen, druckmittelbeaufschlagten Hubelementen mit die Überlegungen einzubeziehen. Hubelemente dieser Art haben zumeist eine kissenartige Gestalt. Sie können aus einem flexiblen Folienmaterial bestehen und sind durch ein Ein-/Auslaßventil mit einer Druckmittelquelle verbunden.

Entsprechende Hubelemente können durch gewebearmierte Schläuche gebildet werden, wie beispielsweise bei der Feuerwehr gebräuchlich. Sie zeichnen sich durch eine besonders große mechanische Widerstandsfähigkeit bei guter Flexibilität aus, wodurch sich eine nahezu lineare Abhängigkeit zwischen der erzeugten Schließkraft und dem Innendruck des Schlauches ergibt. Ein feinfühliges Aneinanderanlegen der beiden Teile des Formwerkzeuges wird hierdurch begünstigt. Entsprechende Schläuche sind bei langgestreckten Werkzeugen bevorzugt im Bereich der Längsseiten der Werkzeuge angeordnet.

Der Gegenstand der vorliegenden Erfindung wird nachfolgend anhand von Ausführungsbeispielen in den beigefügten Zeichnungen weiter verdeutlicht. Es zeigen:

Figur 1 ein Formwerkzeug der erfindungsgemäßen Art mit voneinander abgehobenem Werkzeugober- und Werkzeugunterteil.

Figur 2 das in Figur 1 gezeigte Formwerkzeug in geschlossenem Zustand.

Figur 3 das in Figur 2 gezeigte Formwerkzeug in einer teilweisen Ansicht von hinten.

Figur 4 eine beispielhafte Ausführung eines auf einem Werkzeugträger gelagerten Werkzeugunterteils, bei dem die Hubeinrichtung aus zwei in Serie geschalteten Luftkissen besteht.

Figur 5 ein Formwerkzeug ähnlich Figur 1, bei dem das Werkzeugunterteil geradlinig und das Werkzeugoberteil um eine Schwenkachse bewegt werden kann.

Das in der Zeichnung wiedergegebene Formwerkzeug umfaßt ein Gestell 1, das aus rahmenartig verschweißten Stahlprofilen großen Querschnittes zusammengestzt ist. Das Gestell ist dementsprechend von großer Tragfähigkeit und Steife und gestattet die unmittelbare Anlaschung aller für den normalen Betrieb erforderlichen Zusatz- und Hilfsaggregate und damit die Herstellung der Betriebsbereitschaft des Formwerkzeuges an einer von dem späteren Einsatzort getrennten Stelle. Die für einen Werkzeugwechsel erforderlichen Zeiten der Betriebsunterbrechung am Einsatzort lassen sich hierdurch auf ein Minimum reduzieren, wobei es von hervorzuhebendem Vorteil ist, daß unbeabsichtigte Beschädigungen der betriebsfertigen Einheit während des Transportes durch das die Einheit außenseitig umschließende, rahmenartige Gestell 1 weitgehend ausgeschlossen sind. Ein Wechsel der kompletten Einheit bereitet daher in der Regel keine Schwierigkeiten.

Das rahmenartige Gestell 1 besteht aus dem Ober- und dem Unterrahmen, die bei einem übereinstimmenden, rechteckigen Grundriß übereinanderliegend angeordnet und an den Eckpunkten durch nicht gezeigte Säulen starr verbunden sind. An dem Oberrahmen ist der das Werkzeugoberteil 2 tragende, nicht bewegbare Werkzeugträger 5 starr festgelegt, wodurch eine präzise Zuordnung desselben zu dem Gestell 1 gewährleistet ist.

Der bewegliche Werkzeugträger 4 liegt bei geöffnetem Formwerkzeug auf der Oberseite des Unterrahmens auf. Er ist zusätzlich durch eine nicht gezeigte Hebevorrichtung abgestützt, die ein Anheben in Richtung des Oberrahmens gestattet. Um hierbei ein seitliches Auswandern des Werkzeugträgers 4 zu verhindern, ist er mit nicht gezeigten Führungen versehen, die sich in senkrechter Richtung ersteckende Führungsschienen der Säulen klammerartig umschließen. Die Hebeeinrichtung dient lediglich dem Anheben des unteren Werkzeugträgers 4 in die erste Stellung. Sie kann beispielsweise motorisch betätigbare Zahnstangen- oder Spindeltriebe umfassen, die den bewegbaren Werkzeugträger 4 und das Gestell 1 im Bereich der Säulen verbinden.

Der Hub der Hebeeinrichtung ist zweckmäßig etwas größer, als für das Erreichen der ersten Stellung erforderlich, um das störungsfreie Einrücken der die Schwenkhebel 9.3 umfassenden Blockiereinrichtung zu begünstigen. Die Blockiereinrichtung wird anschließend betätigt, was beispielsweise durch ein Schrittschaltwerk erfolgen kann, und der untere Werkzeugträger 4 anschließend zur Entlastung der Hebeeinrichtung mit seinen Stützflächen 8 auf den Schwenkhebeln 9.3 abgelegt. Der untere Werkzeugträger 4 befindet sich damit in der ersten Stellung. Auch die nachfolgenden Arbeitsschritte können durch das Schrittschaltwerk automatisch gesteuert sein.

Die Schwenkhebel 9.3 sind in dem Unterrahmen des Gestells schwenkbar gelagert. Die Schwenkung wird durch zwei motorisch angetriebene Wellen 10 bewirkt, an denen die Schwenkhebel 9.3 in gleichmäßigen Abständen festgelegt sind. Sie erstrecken sich bei eingerückter Blockiereinrichtung parallel zur Richtung der Schließbewegung, bei ausgerückter Blockiereinrichtung in einem rechten Winkel zu derselben.

Bei der gezeigten Ausführung ist nur auf dem unteren Werkzeugträger 4 eine Hubeinrichtung 6 angeordnet. Diese besteht aus einem Hubelement in Gestalt eines druckbeaufschlagbaren Luftkissens, das den Hilfsträger 4.1 mit einer der Größe des Werkzeuges entsprechenden, pneumatischen Wirkfläche untergreift. Das in der ersten Stellung noch einen geringen Abstand von dem Werkzeugoberteil 2 aufweisende Werkzeugunterteil 3 kann dadurch bei Einspeisung von Druckluft feinfühlig an das Werkzeugoberteil 3 angelegt und gleichmäßig mit demselben verpreßt werden. Für die Schonung des Werkzeuges und die Herstellung hochwertiger Formteile ist das von erheblichem Vorteil.

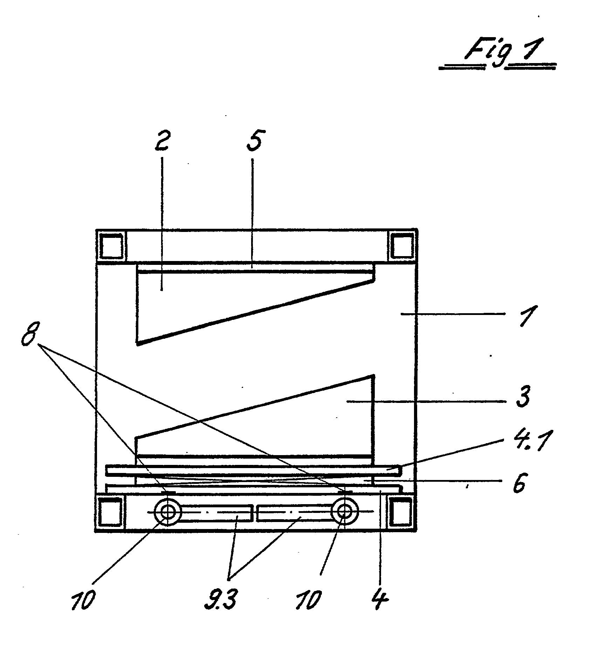

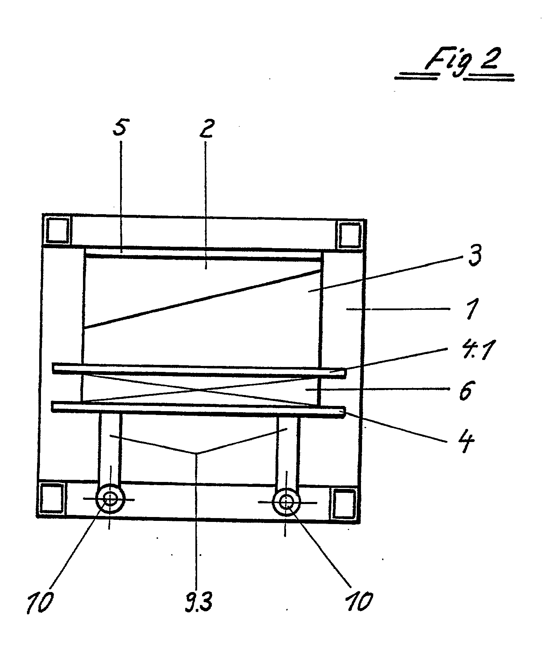

Nach dem Füllen des Formwerkzeuges und dem Abschluß des Reaktionsprozesses wird das Formwerkzeug erneut geöffnet, wozu in ersten Arbeitsschritt das Luftkissen entleert und dadurch der Hilfsträger 4.1 auf dem unteren, beweglichen Werkzeugträger 4 zur Ablage gebracht wird. Der bewegliche Werkzeugträger 4 wird sodann geringfügig angehoben, um die Schwenkhebel zu entlasten und ausrücken zu können. Er kann anschließend aus der in Figur 2 gezeigten Position in die in Figur 1 gezeigte Position zurückverbracht werden. Das fertige Formteil ist damit entnehmbar und das geöffnete Formwerkzeug zur Vorbereitung für den nächsten Formungsvorgang vefügbar.

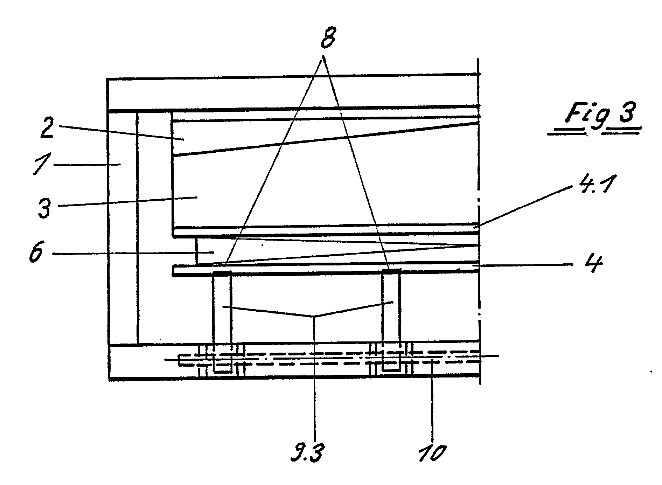

Durch Figur 3 soll die gegenseitige Zuordnung zwischen den Schwenkhebeln 9.3 und den durchgehenden Wellen 10 verdeutlicht werden. Es ist zu ersehen, daß die Schwenkhebel im Zuge einer jeden Welle einen gleichbleibend geringen, gegenseitigen Abstand haben, wodurch sich eine gute Abstützung des bewegbaren Werkzeugträgers 4 auf seiner ganzen Länge ergibt. Die Biegebeanspruchung des bewegbaren Werkzeugträgers 4 in Richtung seiner Längsachse ist dementsprechend gering und gestattet eine leichte Auslegung, wodurch bereits unter Verwendung von verhältnismäßig geringen Antriebskräften große Beschleunigungen beim Öffnen und Schließen des Formwerkzeuges erzielt werden können. Die Taktzeiten sind gering und erleichtern die Verwendung des erfindungsgemäßen Formwerkzeuges in der Massenproduktion.

Die Schwenkhebel werden durch einen gemeinsamen Antrieb betätigt, und unter diesem Gesichtspunkt hat es sich in konstruktiver Hinsicht bewährt, sie in ihrer Gesamtheit einheitlich zu gestalten.

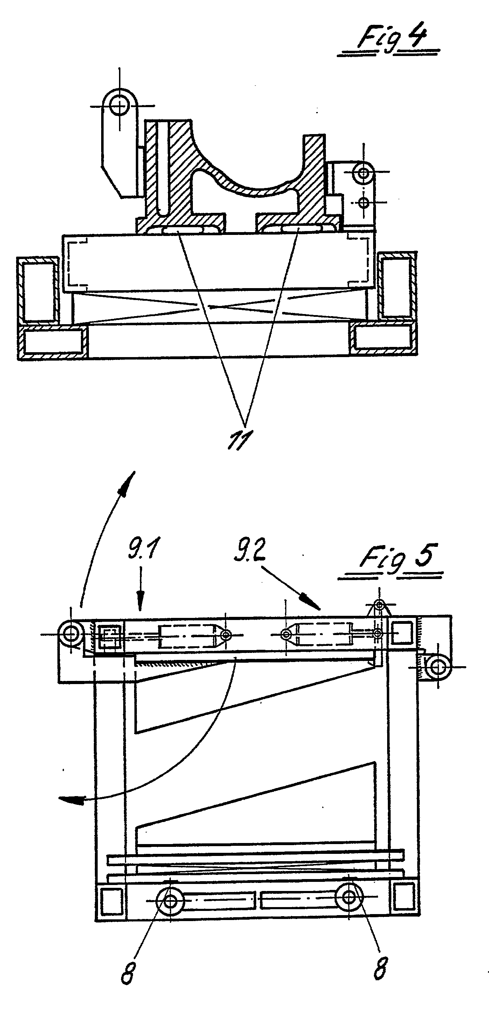

In Figur 4 ist ein Werkzeugunterteil quergeschnitten dargestellt, bei dem die Hubeinrichtung durch zwei sich parallel zueinander erstreckende, längliche Luftkissen gebildet wird. Diese werden durch gewebearmierte Feuerwehrschläuche gebildet, die in einer Serienschaltung unterhalb der Längsseiten des langgestreckten Formwerkzeuges angeordnet sind. Sie haben bei vernachlässigbarer Dehnung eine hervorragende Flexibilität, wodurch sich zwischen dem Innendruck und der radialen Aufweitung des Durchmessers beim Einspeisen eines fließfähigen Mediums eine lineare Abhängigkeit ergibt. Der Hub und die Schließkraft lassen sich dadurch feinfühlig steuern, wobei es von hervorzuhebender Bedeutung ist, daß eventuelle Verformungen der Werkzeugträger und/oder der Werkzeuge selbsttätig ausgeglichen werden. Auch beim Vorliegen entsprechender Deformierungen ist daher eine in allen Teilbereichen abgeschlossene Schließbewegung des Formwerkzeuges gewährleistet, was die Abdichtung desselben vereinfacht. Unerwünschte Querverlagerungen des Formunterteiles werden durch die gezeigten Führungen verhindert.

Figur 5 zeigt ein Formwerkzeug ähnlich Figur 1, bei dem der Raum oberhalb des Werkzeugunterteils frei gemacht werden kann, um einen Austausch des Werkzeugunterteils mittels eines Kranes zu ermöglichen. Zur Erreichung diesen zweckes sind sowohl der Oberrahmen des Gestells als auch der obere Werkzeugträger in der dargestellten Weise schwenkbar gelagert. Ein Austauschen des Werkzeugoberteils mit Hilfe eines Kranes ist hierdurch ebenfalls möglich.

Die Schwenkung des Oberrahmens und des oberen Werkzeugträgers wird durch nicht dargestellte Kolben-/Zylindereinheiten bewirkt. Weitere Kolben-/Zylindereinheiten dienen der mechanischen Blockierung des Oberrahmens bzw. oberen Werkzeugträgers in der dargestellten Position. Sie wirken mit einem Riegelverschluß 9.1 bzw. einem Hakenverschluß 9.2 zusammen.

## Patentansprüche

1. Formwerkzeug zur Herstellung eines Formteiles aus Mehrkomponenten-Kunststoff, insbesondere Polyurethan, umfassend ein Gestell, zwei in dem Gestell auf Werkzeugträgern festgelegte Teilwerkzeuge, die durch eine Relativbewegung wenigstens eines Werkzeugträgers (4) in eine erste Stellung bringbar sind, in der die Teilwerkzeuge (2, 3) einen geringen gegenseitigen Abstand haben, wobei der bewegbare Werkzeugträger (4) in der ersten Stellung auf sich quer zu seiner Richtung ersteckenden Stirnflächen von Schwenkhebeln (9.3) abstützbar ist und wobei eine Hubeinrichtung (6) vorgesehen ist, durch die die Teilwerkzeuge (2, 3) in eine zweite Stellung annäherbar und verpreßbar sind, dadurch gekennzeichnet, daß an dem bewegbaren Werkzeugträger (4) auf der von den Teilwerkzeugen (2, 3) abgewandten Seite sich im wesentlichen quer zur Richtung der Schließbewegung erstreckende Stützflächen (8) vorgesehen sind, daß die Schwenkhebel (9.3) an durchgehenden Wellen (10) über die ganze Länge des bewegbaren Werkzeugträgers (4) verteilt und in einem gleichbleibend geringen, gegenseitigen Abstand an den Wellen (10) festgelegt sind und daß die Wellen (10) auf der von den Teilwerkzeugen (2, 3) abgewandten Seite des bewegbaren Werkzeugträgers (4) in dem Gestell (1) gelagert sind.

2. Formwerkzeug nach Anspruch 1, dadurch gekennzeichnet, daß die Wellen (10) in der Wirkungsrichtung der Hubvorrichtung in dem Gestell (1) gelagert sind.

3. Formwerkzeug nach Anspruch 1 bis 2, dadurch gekennzeichnet, daß die Wellen (10) in der Bewegungsebene der Stützflächen (8) angeordnet sind.

4. Formwerkzeug nach Anspruch 1 bis 3, dadurch gekennzeichnet, daß die Schwenkhebel (9.3) von säulenförmiger Gestalt sind.

5. Formwerkzeug nach Anspruch 1 bis 4, dadurch gekennzeichnet, daß die Schwenkhebel (9.3) an paarweise benachbarten, gegensinnig drehbaren Wellen festgelegt und im wesentlichen quer zur Richtung der Schließbewegung im Gestell (1) ablegbar sind.

6. Formwerkzeug nach Anspruch 1 bis 5, dadurch gekennzeichnet, daß die Schwenkhebel (9.3) eines jeden Paares der Wellen (10) einander auf Lücke zugeordnet und dadurch ineinandergreifend ablegbar sind.

7. Formwerkzeug nach Anspruch 1 bis 6, dadurch gekennzeichnet, daß der Werkzeugträger (4) als rechteckige Platte ausgebildet ist und daß die Stützflächen (8) im Bereich der Längskanten der Platte angeordnet sind.

## Claims

1. A mould for producing a moulding from multicomponent plastic, in particular polyurethane, comprising a frame, two part-moulds which are fixed on mould carriers in the frame and can be brought by a relative movement of at least one mould carrier (4) into a first position, in which the part-moulds (2, 3) are at a small distance from each other, the movable mould carrier (4) being supportable in the first position on end faces of pivoted levers (9.3), the said faces extending transversely to the direction of the said levers, and a lifting device (6) being provided, by which the partmoulds (2, 3) can be moved together into a second position and pressed, characterized in that supporting surfaces (8), extending essentially transversely to the direction of the closing movement, are provided on the side of the movable mould carrier (4) facing away from the partmoulds (2, 3), in that the pivoted levers (9.3) are distributed over the entire length of the movable mould carrier (4) on continuous shafts (10) and are fixed to the shafts (10) at a constantly small distance from each other, and in that the shafts (10) are mounted in the frame (1) on the side of the movable mould carrier (4) facing away from the part-moulds (2, 3).

2. A mould according to claim 1, characterized in that the shafts (10) are mounted in the frame (1) in the operating direction of the lifting device.

3. A mould according to either of claims 1 to 2, characterized in that the shafts (10) are arranged in the plane of movement of the supporting surfaces (8).

4. A mould according to any of claims 1 to 3, characterized in that the pivoted levers (9.3) are of columnar design.

5. A mould according to any of claims 1 to 4, characterized in that the pivoted levers (9.3) are fixed on shafts which are alongside each other in pairs and can rotate in opposite directions, and the said levers can be laid down in the frame (1) essentially transversely to the direction of the closing movement.

6. A mould according to any of claims 1 to 5, characterized in that the pivoted levers (9.3) of each pair of shafts (10) are staggered with respect to each other and, as a result, can be laid down with one engaging in the other.

7. A mould according to any of claims 1 to 6, characterized in that the mould carrier (4) is designed as a rectangular plate and in that the supporting surfaces (8) are arranged in the region of the longitudinal edges of the plate.

**Revendications**

1. Outil de façonnage pour la production de pièces de forme en plastiques multicomposants, particulièrement en polyuréthane, comprenant un bâti, et, fixés dans le bâti sur des porte-outils, deux semi-outils qui peuvent être amenés par un mouvement relatif d'au moins un porte-outil (4) dans une première position dans laquelle les semi-outils (2, 3) possèdent un faible écart réciproque, le porte-outil mobile (4) reposant dans la première position sur des surfaces frontales de leviers de pivotage (9.3) qui s'étendent transversalement à sa direction, et un dispositif de levage (6) étant prévu par lequel les semi-outils (2.3) peuvent être rapprochés et comprimés dans une deuxième position, caractérisé en ce que sur le porte-outil mobile (4), du côté qui ne fait pas face aux semi-outils (2, 3), sont prévues des surfaces d'appui (8) qui s'étendent en substance transversalement à la direction du mouvement de fermeture, en ce que les leviers de pivotage (9.3) sont distribués sur des arbres continus (10) répartis sur toute la longueur du porte-outil mobile (4) et sont fixés aux arbres (10) à des intervalles réciproques, constants, réduits et en ce que les arbres (10) sont reçus dans le bâti (1) du côté du porte-outil mobile (4) qui ne fait pas face aux semi-outils (2.3).

2. Outil de façonnage suivant la revendication 1, caractérisé en ce que les arbres (10) sont reçus dans le bâti dans le direction de l'action du dispositif de levage.

3. Outil de façonnage suivant les revendications 1 à 2, caractérisé en ce que les arbres (10) sont aménagés dans le plan de déplacement des surfaces d'appui (8).

4. Outil de façonnage suivant les revendications 1 à 3, caractérisé en ce que les leviers de pivotage (9.3) ont la forme de colonnes.

5. Outil de façonnage suivant les revendications 1 à 4, caractérisé en ce que les leviers de pivotage (9.3) sont fixés à des arbres qui s'avoisinent par paires et tournent dans des directions opposées et en ce qu'ils sont escamotables dans le bâti, en substance transversalement au mouvement de fermeture.

6. Outil de façonnage suivant les revendications 1 à 5, caractérisé en ce que les leviers de pivotage (9.3) de chaque paire d'arbres (10) sont disposés l'un par rapport à l'autre en quinconce et peuvent être agencés de façon engrenée.

7. Outil de façonnage suivant les revendications 1 à 6, caractérisé en ce que le porte-outil (4) est formé par une plaque rectangulaire et en ce que les surfaces d'appui (8) sont disposées dans la région de côtés longitudinaux de la plaque.

*Fig 1*

Fig 2

Fig 3

_Fig 4_

11

_Fig 5_

9.1    9.2

8        8